# EUROPEAN PATENT APPLICATION

(11) **EP 0 534 778 A2**
(43) Date of publication of application: **31.03.1993**
(21) Application number: 92308753.0
(22) Date of filing: 25.09.1992
(51) Int. Cl.: B25J 15/02

(54) **Controlled flexure element**

(30) Priority: 25.09.1991 GB 9120379
(71) Applicant: UNIVERSITY OF BRISTOL, Bristol BS8 1TH (GB)
(72) Inventor: Brett, Peter Nigel, Saltford, Bristol BS18 3DL (GB); Khodabandehloo, Koorosh, Bishopston, Bristol BS7 8EW (GB)
(74) Representative: Cheyne, John Robert Alexander Mackenzie

(57) **Abstract**

A controlled flexure element comprises an elongate body which is partitioned into chambers 16. These chambers receive fluid under pressure, such as compressed air, and are each connected by fluid carrying lines 34 to a pneumatic supply 36. An increase in pressure in any one chamber results in flexure of the element at that region of the element. Such flexure is detected by a plurality of displacement sensors 24 which are housed on an elongate metal strip 22 and run the length of the flexure element. By use of a processing unit 42 and a controller 40 the profile of the element and the load applied to it can be determined, and the applied pressure can be controlled to enable delicate or non-rigid objects to be manipulated.

## Description

This invention relates to a controlled flexure element and particularly, although not exclusively, to the control of such an element which is substantially in the form of a finger for use in a gripping device, to enable the manipulation of delicate or non-rigid articles and substances such as soft food products.

The demand has risen for increasingly adaptable systems to enable manipulation of objects with a level of dexterity that has not yet been achieved in commercial devices.

A controlled flexure element of polymeric material is disclosed in GB-A-2237552. The element is controlled by the application of pressure to one or more chambers within the element.

Such an element has the advantage of being commercially viable, due to the mechanical simplicity, but has only been the subject of open loop control, which is not suitable for precise control of shape and force.

According to the present invention there is provided a controlled flexure element comprising an elongate body having a plurality of actuators distributed along its length for adjusting the flexure of the element, the element also having a plurality of displacement sensors distributed along its length, each of which is responsive to flexure of the element at the location of that element. By use of high level sensory apparatus and control, objects of large variance in size and non-rigid objects can be manipulated.

Preferably, the actuators comprise chambers of fluid, for example air, whereby the application of pressure to the fluid causes flexure in that portion of the flexure element which corresponds to the position of the respective actuator. The flexure may be the result of a difference in the compliance of different portions of the element surrounding the chambers, resulting in different levels of deformation when under stress.

In a preferred embodiment the displacement sensors comprise strain gauges which may be disposed on a common flexible elongate support, for example a metal strip, which runs internally along the length of the flexure element. This support then serves to increase the lengthwise rigidity of that section of the flexure element (enabling the outer casing to be of uniform thickness).

In the use of an element in accordance with the present invention, signals are received in real time from the sensors which are distributed along the length of the flexure element. These signals can then be interpreted to reveal the finger profile. When account is taken for the signals that are sent to the actuators, the load size and distribution acting along the length of the element can be calculated.

In particular, to enable calculation of external loads, the flexure element may be modelled mathematically as a slender cantilever subject to a large deflection. This model then includes actuator signal values (i.e. pressure signals in an air-actuated element) which correspond to the possible finger profiles when no external load is applied. In this way, the differences between the actual pressure applied to the element under external load and those pressures which would be required in order to create the same finger profile under no external load, are used to calculate external loading conditions. By use of real time control algorithms, the actuator signals can then be controlled in response to the external load conditions. By selective programming of the control system, information can be gathered both on an object's shape, by determining where an external load is present, and its centre of gravity, by analyzing the distribution of forces exerted by the object, enabling real time control of the position of the object. This could then be applied to overcome the additional problems faced by non-rigid objects, whereby the "flow" of an object may be interpreted and accounted for, by analysis of the movement of its centre of gravity and continuous detection of the object profile.

For a better understanding of the present invention and to show how it may be carried into effect, reference will now be made by way of example to the accompanying drawings in which:
Figure 1 shows a robotic gripper;
Figure 2 shows a finger of the gripper of Figure 1, when subjected to no external load;
Figure 3 shows the same finger portion as Figure 2 when an external load is applied;
Figure 4 shows the whole finger;
Figure 5 shows a sensor element incorporated in the finger of Figure 4;
Figure 6 is a schematic representation of the finger;
Figure 7 is a block diagram representing the operation of the gripper.

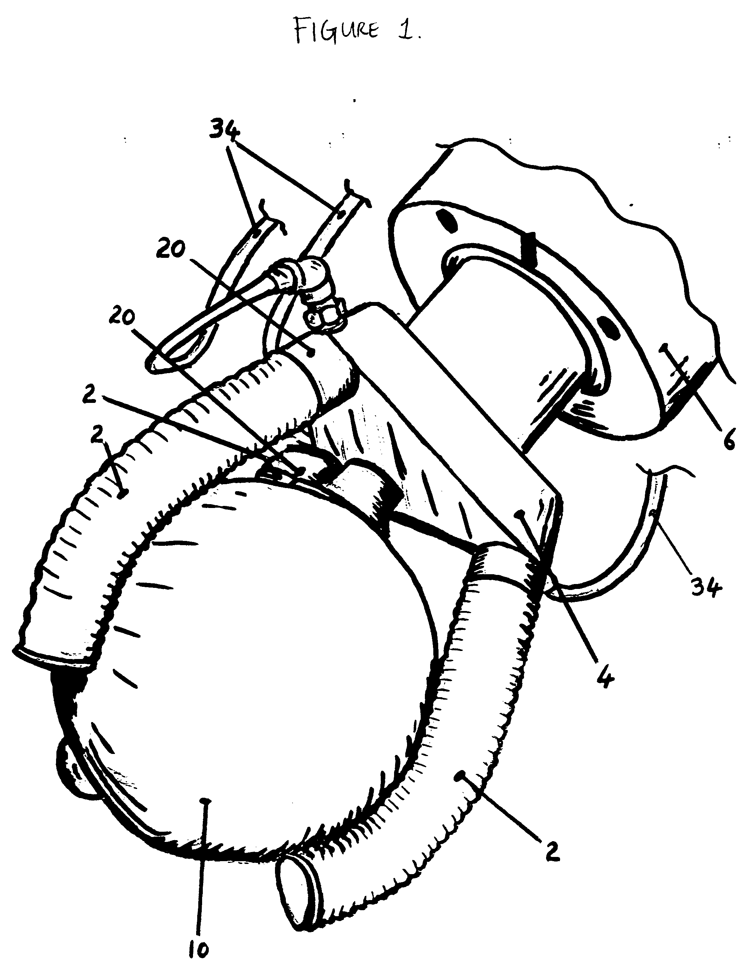

The gripper shown in Figure 1 comprises three controlled flexure elements 2, which can be regarded as fingers, mounted on a support block 4. The support block is attached to the end of a robots arm 6. The fingers enclose a volume 8 which is analogous to the palm of a human hand. This gripper can then be controlled to manipulate a variety of objects 10 of non-standardized size or objects formed from non-rigid materials.

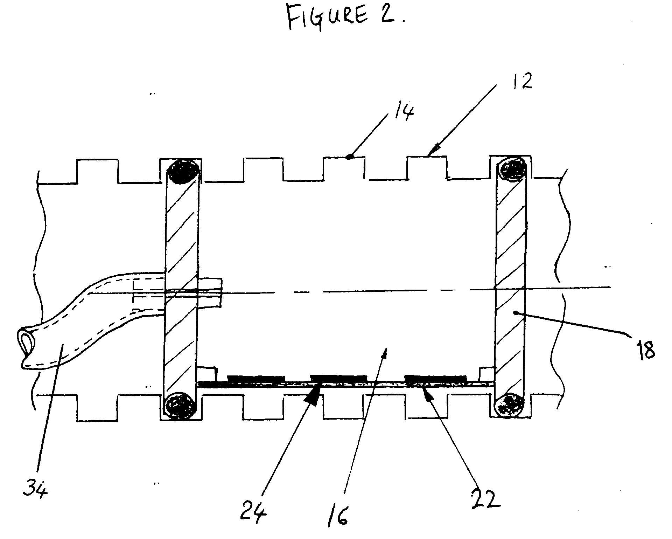

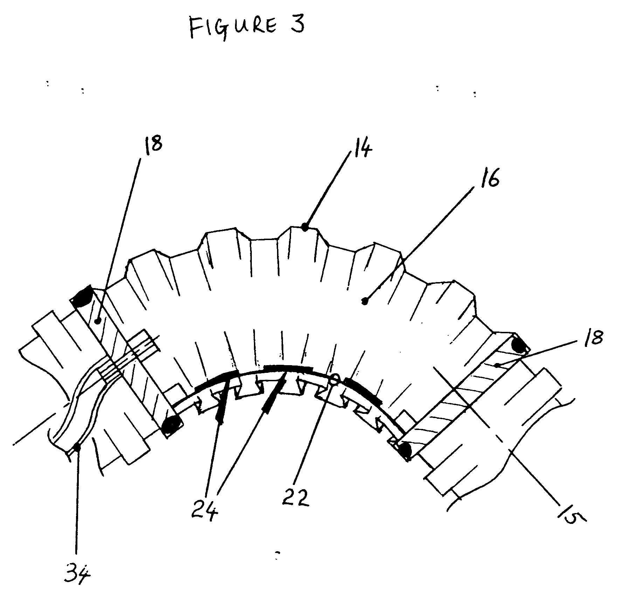

As shown in Figures 2 and 3, each finger has a convoluted outer casing 12 having circumferential ribs 14. The casing is made from a flexible polymer or elastomer material. The interior of the casing is separated into compartments 16 by partitions 18. At one end each finger is provided with a mounting body 20 which is secured to the support block 4 (Figure 1).

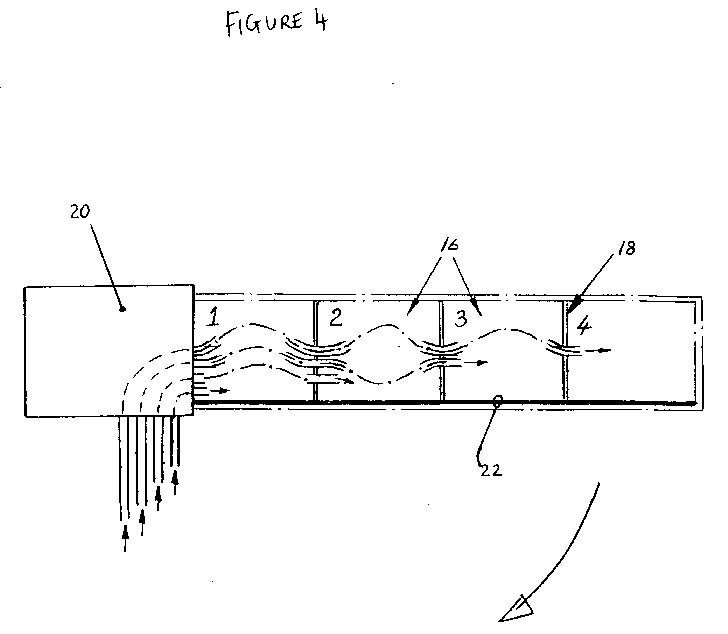

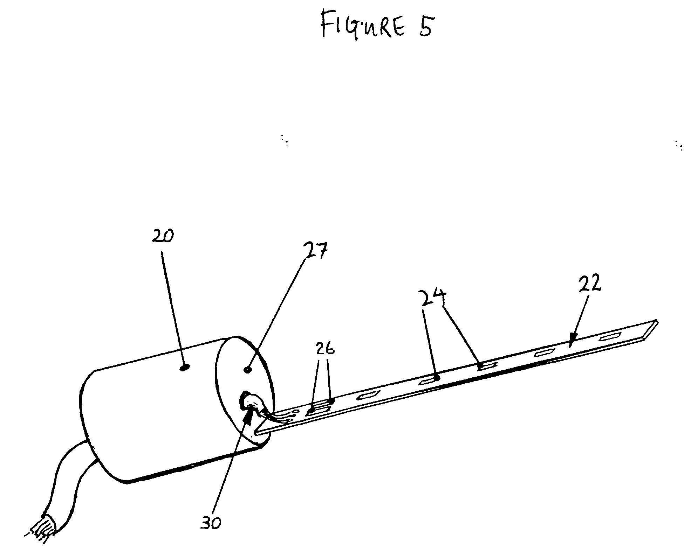

As shown in Figure 4 a support 22 in the form of a thin strip of spring steel runs along the interior of the finger 2. Strain gauges 24 (Figure 5) are mounted on the strip at intervals so that at least one strain gauge 24 is accommodated in each compartment 16. Each strain gauge 24 comprises two strain gauge elements 26, one on each surface of the strip 22. The strip 22 and the attached strain gauges 24 are provided with a protective coating.

The terminals of the strain gauges are connected by wires which are brought together in a lead 30 which passes through the mounting body 20 (Figure 5) at one end of the finger adjacent to the support block 4. There is a hermetic seal 27 between the mounting body 20 and the outer casing 12.

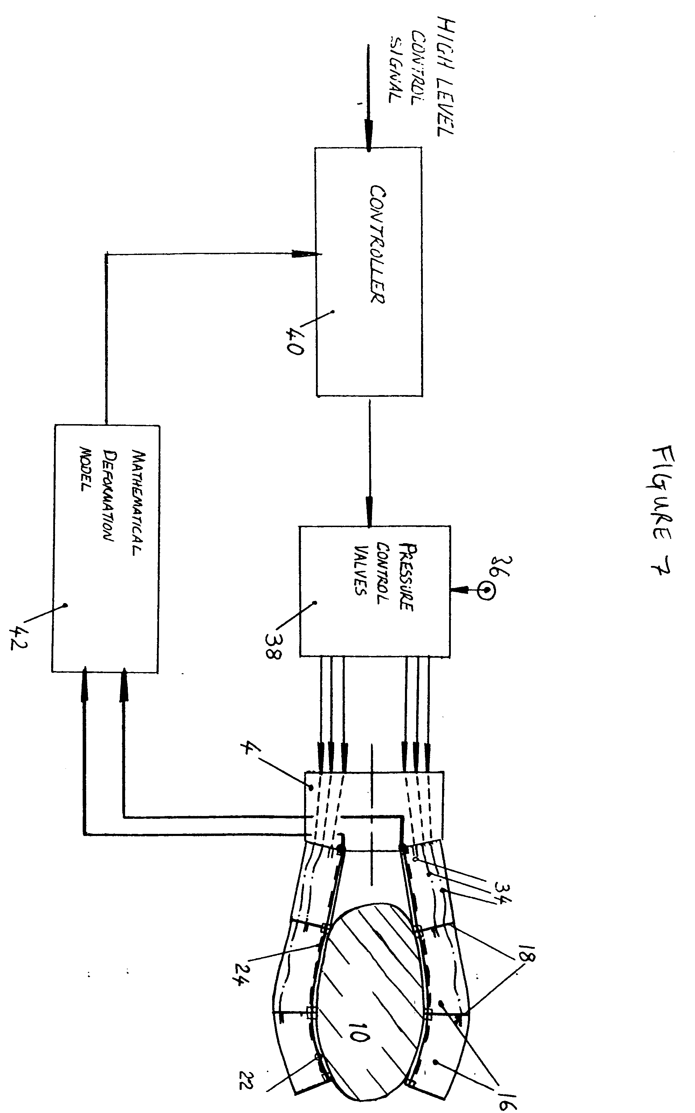

As shown in Figure 7, each compartment 16 of each finger 2 is connected by a respective air line 34 to a pneumatic supply 36 via pressure control valves 38. The air lines 34 extend longitudinally of the finger 2 from the support block 4, through the mounting body of the respective finger to the compartments 16.

A pressure controller 40 generates pressure control signals which are applied to the pressure control valves 36 to control the pressures in the individual compartments 16. The controller 40 receives input from a processing unit 42 which includes a computer model of the fingers 2.

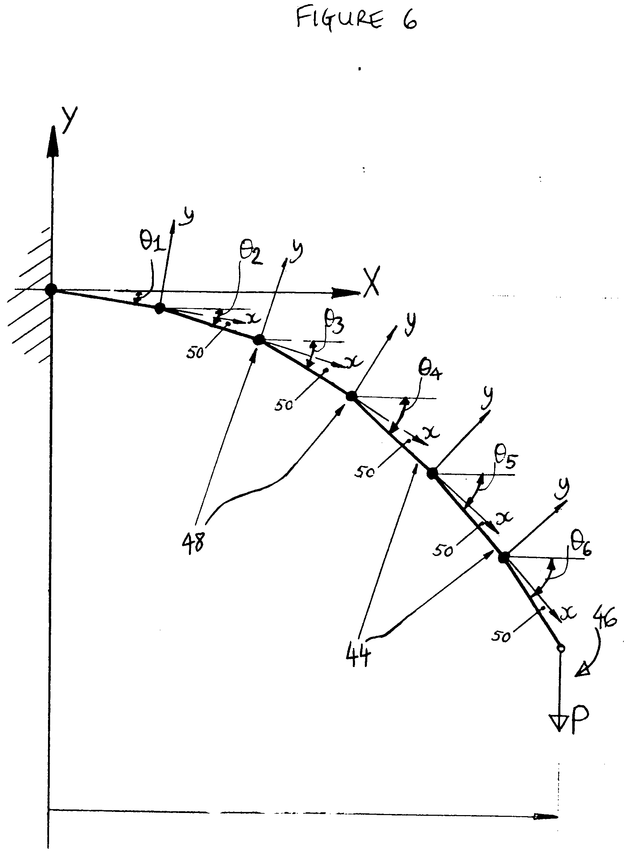

Figure 6 represents a mathematical model by which the behaviour of each finger 2 is simulated. The model comprises a plurality of rigid elements 44, adjacent rigid elements being connected together by torsion springs (not shown), enabling local bending when under the action of an external moment 46.

These springs represent nodal points 48 in the finger model and correspond to the positions of the strain gauges 24 in the actual fingers 2. Moments which act upon the springs in the model may be evaluated from readings obtained from the strain gauges 24. The processing unit receives net signals from the strain gauges 24 and derives from those signals the moments which act upon the springs in the model. On the basis of these moments the local deflections 50 at the nodal points 48 can be determined. By the use of local reference frames (x,y) as in Figure 6, these readings may be used to obtain the global deflections (ϑ₁-ϑ₆) of the individual points, so providing the complete finger profile with respect to a global reference frame (X,Y).

In order to create the desired bending in the fingers 2, the pressure applied to the finger compartments 16 is controlled. In Figure 3, the effect of an increase of pressure in one compartment is shown. The partitions 18 provide an air-tight seal between adjacent compartments 16 and the air supply line 34 passes sealingly through the partition 18 into the compartment 16. Owing to the convoluted outer casing 12, an increase in pressure applied to the compartment 16 can be translated into an increase in volume of the compartment 16. However, owing to the lengthwise rigidity of the metal strip 22, and its connection to the partitions 18 at each end of the compartment 16, lengthwise expansion is inhibited in that region of the compartment 16 which corresponds to the position of the metal strip 22. The strip 22 is disposed off the longitudinally running centre line 15 of the finger 2 and as a result an increase in volume of the compartment 16 owing to an increase in applied pressure manifests itself as flexure of the finger 2 at that region which corresponds to the position of the compartment 16 to which pressure is applied. The degree of flexure can be controlled by adjustment of the pressure in the compartment 16. The spring steel strip 22 acts as a restoring means, in conjunction with the inherent elasticity of the outer casing 12.

During operation of the system, flexure of the fingers 2 is detected by the strain gauges 24. Signals from the strain gauges are fed into the processing unit 42. The strain gauge signals are interpreted to reveal local deflections 50, and by use of reference frames (x,y) the global finger profile is obtained. The processing unit 42 also receives signals representing the pressure applied to the finger compartments 16. By use of the mathematical model of the finger, which includes the pressure values which correspond to the possible finger profiles when under no external load, the processing unit 42 can then reveal information on both the object profile, by detecting at which points an external load is present, and the external load distribution created by the object, by analysis of the differences between the applied pressure and those pressure values which would result in the same finger profile if no external load were present. This information is then fed to the controller 40 which generates the signals to be applied to the pressure control valves 38. By selective programming of the controller 40 the system may be controlled to enable manipulation of a variety of objects 10. If, for example, a rigid but delicate object is to be manipulated, a maximum external load may be set, which represents a certain grip tightness. For the fingers of the gripper to wrap around an object, a uniform distribution of contact force is required. This also may be achieved through appropriate programming of the controller 40. If alternatively, a non-rigid object is to be handled, then in addition to setting a maximum grip tightness, the shape of the object can be monitored by continuous detection of the object profile. This information, in conjunction with information on the force distribution exerted by the object along the fingers 2 can be used to maintain the object's centre of gravity within the volume analogous to the palm 8 of the gripper 1. It is possible to determine the value and location of the centroid of force acting on the finger using measurements from three sensors 24 only. This can be useful to simplify construction of the finger and provides sufficient feedback data for some applications. However this reduces accuracy and it may then be difficult to determine a suitable distribution of force, particularly when manipulating a non-rigid object.

The system of control of the gripper may also benefit from a self-calibration scheme. It is necessary to recalibrate the device from time to time especially where the flexing properties of materials that are used in the construction of the finger are particularly sensitive to temperature. With a finger free from any contact, a known air pressure is applied in the chambers and the deflection is measured using the strain gauges 24 on the strip 22. The output from each strain gauge 24 approximates to δ(1-e^{-t/T}) where t is the time and δ and T are temperature dependent constants. A software programme is then used to obtain the values of these constants using a best fit approach. It is then possible to determine the deflection characteristics of the finger using the known pressures applied and the value obtained for δ. The value of T gives an indication of creep behaviour.

A gripping force that is exerted by the fingers of the gripper in normal use may be approximated by a step change in force acting on the fingers, that remains constant with respect to time. In response to such a step change in force applied to a finger, the finger and the strip 22 flex, and consequently strain gauge measurements are obtained. These strain measurements vary in accordance with ε = A(1-e^{-t/T}). The final equilibrium value of strain according to this equation will therefore be A. It is this possible to estimate the final value of strain from the initial strain gauge measurements since T and t are known. This can then be used to determine values of force acting on the fingers of the gripper before the equilibrium state is reached i.e. before the outputs from the strain gauges have had time to reach their final steady state values).

The present invention may be applied to the field of robotics. It may also be applicable to other fields where a controlled actuator, effector or manipulator is required, for example in the field of prosthetics.

## Claims

1. A controlled flexure element comprising an elongate body having a plurality of actuators distributed along its length for adjusting the flexure of the elements, the element also having a plurality of displacement sensors distributed along its length, each of which is responsive to flexure of the element at the location of that sensor.

2. A controlled flexure element as described in claim 1 in which the displacement sensors comprise strain gauges.

3. A controlled flexure element as claimed in claim 2, in which the strain gauges are disposed on an elastic elongate component which extends along the elements.

4. A controlled flexure element as claimed in claim 3 in which there are provided three strain gauges.

5. A controlled flexure element as claimed in any one of the preceding claims, in which the elastic elongate component is a metal strip.

6. A controlled flexure element as claimed in any one of the preceding claims, in which processing means is provided for deriving, from the output of the displacement sensors, information relating to the flexed shape of the element.

7. A controlled flexure element as claimed in any one of the preceding claims, in which means is provided for delivering to the processing means signals representing the force applied to the elements by the respective actuators.

8. A controlled flexure element as claimed in any one of the preceding claims, in which the processing means is adapted to derive, from the signals representing force, information relating to an external load applied to the element.

9. A controlled flexure element as claimed in any one of the preceding claims, in which the actuators comprise variable volume chambers, means being provided for supplying fluid under pressure to the chambers.

10. A controlled flexure element as claimed in any one of the preceding claims, in which the signals representing force are derived from the pressure of the fluid in the chambers.

11. A robotic gripper having a controlled flexure element in accordance with any one of the preceding claims.
